# EUROPEAN PATENT SPECIFICATION

(11) **EP 4 603 355 B1**
(45) Date of publication and mention of the grant of the patent: **25.11.2026**
(21) Application number: 23900689.3
(22) Date of filing: 06.12.2023
(51) Int. Cl.: G05D 1/243, G05D 1/646, G01C 21/34, B60W 40/072, B62D 15/02, G01C 21/36, B60W 30/10

(54) **MOBILE BODY CONTROL SYSTEM, CONTROL METHOD THEREFOR, MOBILE BODY, PROGRAM, AND RECORDING MEDIUM**
STEUERUNGSSYSTEM FÜR MOBILEN KÖRPER, STEUERUNGSVERFAHREN DAFÜR, MOBILER KÖRPER, PROGRAMM UND AUFZEICHNUNGSMEDIUM
SYSTÈME DE COMMANDE DE CORPS MOBILE, PROCÉDÉ DE COMMANDE ASSOCIÉ, CORPS MOBILE, PROGRAMME ET SUPPORT D'ENREGISTREMENT

(30) Priority: 07.12.2022 JP 2022195843
(43) Date of publication of application: 20.08.2025
(73) Proprietor: HONDA MOTOR CO., LTD., Tokyo 105-8404 (JP)
(72) Inventor: SHIRAKATA, Kento, Wako-shi, Saitama 351-0193 (JP); BABA, Ichiro, Wako-shi, Saitama 351-0193 (JP); MATSUNAGA, Hideki, Wako-shi, Saitama 351-0193 (JP); WAKAYAMA, Ryoji, Wako-shi, Saitama 351-0193 (JP); AIZAWA, Koki, Wako-shi, Saitama 351-0193 (JP); KURAMITSU, Yunosuke, Wako-shi, Saitama 351-0193 (JP)
(74) Representative: Kiwit, Benedikt
(86) International application number: PCT/JP2023/043636
(87) International publication number: WO 2024/122577

(56) References cited:
- WO-A1-2017/061260
- WO-A1-2020/065745
- JP-A- 2017 073 117
- US-A- 5 229 941
- US-A1- 2022 089 161

## Description

### TECHNICAL FIELD

The present invention relates to a moving body control system, a control method thereof, a moving body, a program, and a storage medium.

### BACKGROUND ART

Recently, there is an increasing demand for ultra-compact moving bodies (micro mobility vehicles) for supporting movements of people in small regions. Micro mobility vehicles include vehicles each having a riding capacity of one person or so, vehicles that travel carrying a baggage along with a person, instead of carrying the person and the like. The micro mobility vehicles require an autonomous moving technology in order to be able to travel in both moving regions of automobiles and moving regions of pedestrians.

In the autonomous moving technology, there is known a technology of generating a travel route for a moving body to travel and controlling travel of the moving body along the generated route. Regarding generation of the travel route, there is known a technology of generating a travel locus of a preceding vehicle by applying a straight line or a curved line to an observation point indicating a position where the preceding vehicle has passed in a device that controls travel of a self-vehicle so as to follow the preceding vehicle traveling in front of the self-vehicle (JP 2020-32844 A).

US 5 229 941 A shows an autonomous vehicle automatically running on route and its method. WO 2017/061260 A1 shows an event information storage device, event information reading device, operation assistance system and event information storage method. US 20222/089161 A1 shows a vehicle control apparatus.

### SUMMARY OF INVENTION

### TECHNICAL PROBLEM

Note that, in order to avoid a right or left turn at an intersection and an obstacle, a micro mobility vehicle is required to achieve both highly responsive control for accurately following a route to travel and control for stabilizing a behavior of a moving body in consideration of a passenger.

The present invention has been achieved in view of the above-described problem, and an object thereof is to implement a technique capable of achieving both responsiveness to a route to travel and stability of a behavior.

### SOLUTION TO PROBLEM

This disclosure provides a moving body control system, a moving body, a control method of a moving body, a program and a storage medium according to the enclosed independent claims. The invention is defined in the appended claims. Advantageous features of the present invention are defined in the corresponding subclaims.

According to the present invention, a moving body control system that controls an operation of a moving body is provided, the moving body control system comprising:
route generation means for generating a reference route indicating a route from a position of the moving body on which the moving body travels;
part determination means for determining a part of the reference route to be referred to for controlling travel of the moving body out of the reference route; and
control amount determination means for determining a control amount for controlling travel of the moving body with reference to the determined part of the reference route,
wherein
the part determination means determines a part of the reference route so as to include a position distant from the position of the moving body out of a terminal end of a straight line forming the reference route identified by first identification processing, and a terminal end or a change point of a predetermined curvature of a curved line forming the reference route identified by second identification processing.

### ADVANTAGEOUS EFFECTS OF INVENTION

According to the present invention, it is possible to achieve both responsiveness to a route to travel and stability of a behavior.

### BRIEF DESCRIPTION OF DRAWINGS

FIG. 1A is a diagram (1) illustrating a configuration example of a moving body according to an embodiment of the present invention.
FIG. 1B is a diagram (2) illustrating a configuration example of a moving body according to an embodiment of the present invention.
FIG. 2 is a block diagram illustrating a configuration example of a control system of the moving body according to the embodiment.
FIG. 3 is a block diagram illustrating a functional configuration example related to a control unit of the moving body according to the embodiment.
FIG. 4 is a diagram for explaining an outline of travel control at an intersection according to the embodiment.
FIG. 5 is a flowchart illustrating a series of operations of travel control processing in the moving body according to the embodiment.
FIG. 6 is a diagram for explaining determination of a reference route length using a curvature change point according to the embodiment.
FIG. 7 is a diagram for explaining a first example regarding determination of a reference route length using a terminal point of a straight road according to the embodiment.
FIG. 8 is a diagram for explaining a second example regarding determination of a reference route length using a terminal point of a straight road according to the embodiment.
FIG. 9 is a flowchart illustrating a series of operations of reference route length determination processing according to the embodiment.

### DESCRIPTION OF EMBODIMENTS

Hereinafter, an embodiment will be described in detail with reference to the attached drawings.

**In** the following embodiment, as an example of a moving body, which is a micro mobility vehicle, an ultra-compact electric vehicle having a riding capacity of one person or so will be described as an example. Note that, micro mobility vehicles may include a vehicle that travels carrying a baggage along with a person, instead of carrying the person. The present embodiment is not limited to an example in which the moving body is the electric vehicle, and is applicable to any moving body other than the electric vehicle. Furthermore, in the following description, a moving body including one driven wheel will be described as an example, but the driven wheel is not necessarily provided, and the number of driven wheels is not limited to one and may be two or more.

**In** the above-described moving body such as the micro mobility vehicle, it is useful when autonomous travel is implemented in consideration of riding of a person, frequent changes in target position, and non-use of a high-precision map. The micro mobility vehicle does not always travel on a specific fixed route, and it is necessary to appropriately travel in a region in which a high-precision map is not prepared in order to be able to travel in both moving regions of vehicles and moving regions of pedestrians. Furthermore, for example, as in a case of traveling in a shopping mall or an event venue, there is a need to travel while appropriately avoiding a plurality of obstacles in a situation in which the obstacles are irregularly present. In a case where a person rides on the micro mobility vehicle, travel with high stability in consideration of ride comfort is required.

A moving body 100 according to the present embodiment recognizes a travel region and autonomously travels along a generated route without using a high-precision map. Since the autonomous travel is performed without using a high-precision map, a region in which the moving body 100 can travel is identified using information recognized from an output of a detection unit to be described later. For example, the moving body 100 identifies a road structure such as a straight road and an intersection on a road, and generates a route (reference route) for traveling on the identified straight road and intersection on the road. The moving body 100 determines a length of the route to be actually referred to out of the reference route, and determines a control amount of the moving body 100 with reference to the reference route in a range of the determined length. The moving body 100 controls a drive system according to the determined control amount. Note that, in the present embodiment, a route on a straight road and an intersection will be described as an example, but other routes that require steering including right and left turns, start, and stop of the moving body may be included. For example, the present invention can also be applied to a case of changing lanes, moving between a sidewalk and a roadway, a case of traveling while avoiding obstacles, a case of traveling on a road in which a straight road and a curved road are combined and the like. An intersection is a road structure in which two roads are connected, and may include an intersection of another form such as a T-junction in addition to a crossroads. An intersection may include an L-shaped travel path at which two roads are connected.

### <Configuration of Moving Body>

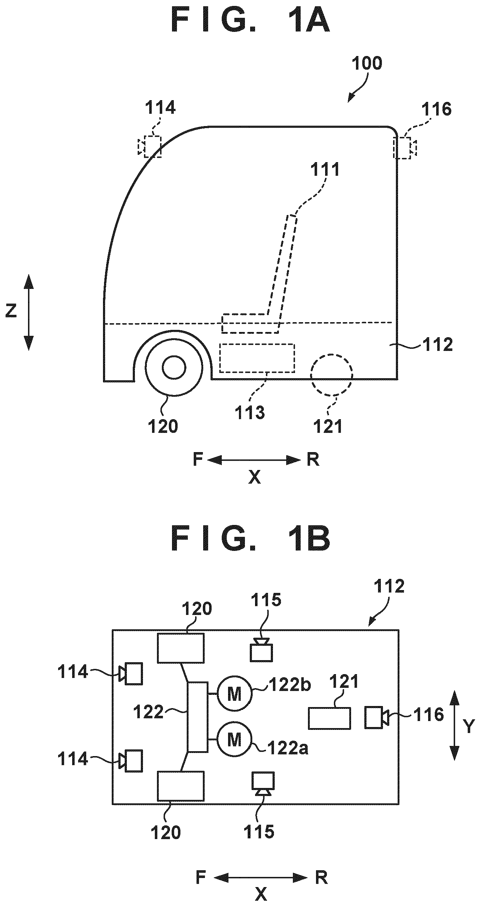

A configuration of the moving body 100 will be described with reference to FIG. 1. FIG. 1A illustrates a side view of the moving body 100 according to the present embodiment, and FIG. 1B illustrates an internal configuration of the moving body 100. In the drawings, arrow X indicates a front-and-rear direction of the moving body 100, F indicates the front, and R indicates the rear. Arrows Y and Z indicate a width direction (left-and-right direction) and an up-and-down direction of the moving body 100, respectively.

The moving body 100 is an electric autonomous vehicle provided with a travel unit 112 and using a battery 113 as a main power supply. The battery 113 is, for example, a secondary battery such as a lithium ion battery, and the moving body 100 autonomously travels by the travel unit 112 with electric power supplied from the battery 113. The travel unit 112 has a form of a three-wheeled vehicle provided with a pair of left and right drive wheels 120, which are front wheels, and one driven wheel 121, which is a rear wheel. Note that, the travel unit 112 may have another form such as a form of a four-wheeled vehicle. The moving body 100 is provided with, for example, a seat for one person 111.

The travel unit 112 is provided with a drive mechanism 122. The drive mechanism 122 is a mechanism that rotates a corresponding drive wheel 120 with motors 122a and 122b as drive sources. By rotating each of the drive wheels 120, the drive mechanism 122 can move the moving body 100 forward or backward. The drive mechanism 122 can also change an advancing direction of the moving body 100 by generating a difference in rotation between the motors 122a and 122b. The travel unit 112 is provided with the driven wheel 121. The driven wheel can make a turn with a Z direction as a rotation axis.

The moving body 100 is provided with detection units 114 to 116, each of which detects a target object around the moving body 100. The detection units 114 to 116 form an external sensor group that monitors the periphery of the moving body 100. In a case of the present embodiment, each of the detection units 114 to 116 is an imaging device that captures an image around the moving body 100, and s provided with, for example, an optical system such as a lens and an image sensor. However, instead of or in addition to the imaging device, a radar or light detection and ranging (LiDAR) can also be used.

For example, two detection units 114 are arranged in a front portion of the moving body 100 to be spaced apart from each other in a Y direction, and are mainly used to detect a target object in front of the moving body 100. The detection units 115 are arranged in a left portion and a right portion of the moving body 100, and are mainly used to detect target objects on the sides of the moving body 100. The detection unit 116 is arranged in a rear portion of the moving body 100, and is mainly used to detect a target object behind the moving body 100.

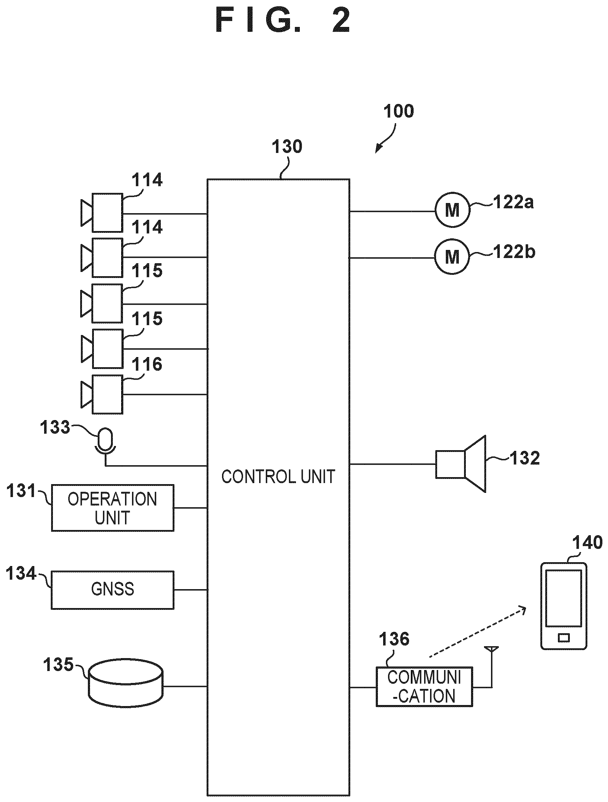

FIG. 2 is a block diagram of a control system of the moving body 100. The moving body 100 is provided with a control unit (ECU) 130. The control unit 130 includes one or more processors represented by a CPU, a memory device such as a semiconductor memory, an interface with an external device and the like. The memory device stores a program to be executed by the processor, data to be used by the processor for processing and the like. A plurality of sets of the processor, memory device, and interface may be provided for respective functions of the moving body 100 so as to be able to communicate with each other.

The control unit 130 acquires outputs (for example, image information) from the detection units 114 to 116, input information into an operation unit 131, voice information input from a voice input device 133 and the like, and executes processing corresponding to each piece of the information. The control unit 130 performs, for example, control of the motors 122a and 122b (travel control of the travel unit 112) and display control of a display panel included in the operation unit 131, gives a notification to an occupant of the moving body 100 by voice, and outputs information. The control unit 130 may execute processing using a machine learning model for image recognition (for example, deep neural network) on the outputs (for example, image information) from the detection units 114 to 116. The control unit 130 may execute processing using a machine learning model for voice recognition (for example, deep neural network) on the output (for example, voice information) from the voice input device 133.

The voice input device 133 includes, for example, a microphone, and collects a voice of the occupant of the moving body 100. The control unit 130 can recognize the input voice and execute corresponding processing. A global navigation satellite system (GNSS) sensor 134 receives a GNSS signal, and detects a current position of the moving body 100.

A storage device 135 includes a nonvolatile storage medium that stores various pieces of data. The storage device 135 may also store a program to be executed by the processor, data to be used by the processor for processing and the like. The storage device 135 may store various parameters (for example, trained parameters of the deep neural network, hyperparameters and the like) of the machine learning model for voice recognition or image recognition to be executed by the control unit 130.

A communication device 136 is a communication device capable of communicating with an external device (for example, a communication terminal 140 owned by a user) via wireless communication, such as Wi-Fi or 5th generation mobile communication.

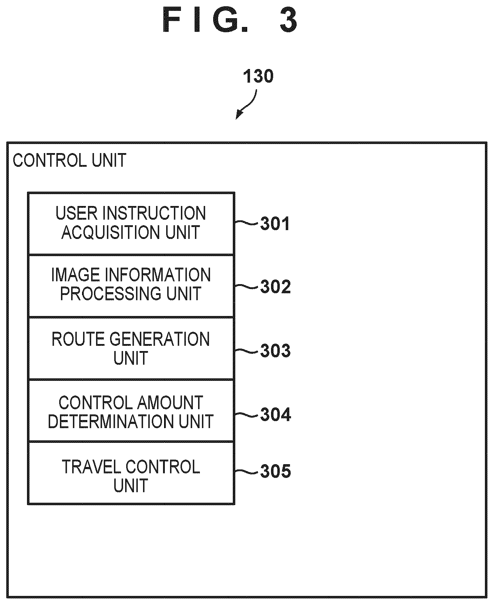

Next, a functional configuration example regarding the control unit 130 will be described with reference to FIG. 3. A user instruction acquisition unit 301 acquires a user instruction input via the operation unit 131 or the voice input device 133. The user instruction includes designation of a final target position at which the moving body 100 should arrive. The final target position may be a position of a target object designated by an utterance voice among target objects recognized in the images output by the detection units 114 to 116. The user instruction may include a change instruction for travel, such as a right turn or a left turn, while the moving body 100 is traveling.

An image information processing unit 302 recognizes a position, a shape, a travel region and the like of an obstacle on the basis of the outputs (for example, image information) of the detection units 114 to 116. The position, shape, and travel region of the obstacle, the road structure and the like in front of the moving body 100 are recognized by, for example, applying the machine learning model for image recognition trained in advance to the images obtained from the two detection units 114. Estimation of a depth from the moving body 100 with the images obtained from the two detection units 114 used as a stereo image may be included. Furthermore, in order to recognize the target object in the image, the machine learning model (for example, deep neural network) for image recognition trained in advance may be used for a monocular image or a stereo image.

A route generation unit 303 generates a reference route on the basis of the travel region recognized by the image information processing unit 302. The reference route indicates a route on which the moving body 100 travels. For example, in a case where there is an intersection the road structure of which is a crossroads, and the moving body 100 turns right at the intersection, the route generation unit 303 generates the reference route so as to pass through a position away from the center of the intersection by a first predetermined distance and travel at a position away from a left end of the road after turning right by a second predetermined distance. The route generation unit 303 may further generate the reference route on the basis of an identified obstacle. Note that, in the present embodiment, the route generation unit 303 may generate the reference route by any method, and may generate the reference route by using a known method.

The control amount determination unit 304 determines a length (reference route length) of the route to be actually referred to out of the reference routes, and determines a control amount of the moving body with reference to the reference route in a range of the determined length. Reference route length determination processing for determining the reference route length will be described later in detail.

The travel control unit 305 controls the travel of the moving body 100 (for example, controls the motors 122a and 122b) according to the control determined by the route generation unit 303.

### <Travel Control of Moving Body Using Reference Route>

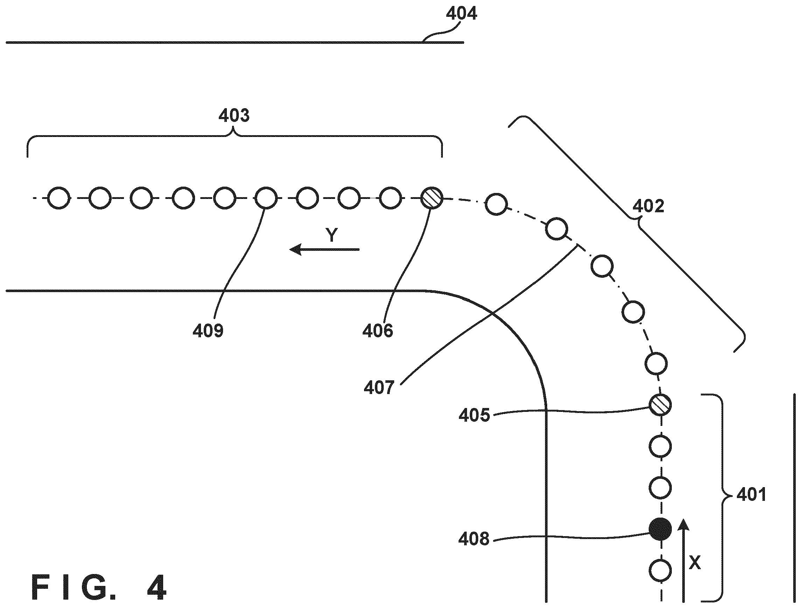

An outline of travel control of the moving body using the reference route will be described with reference to FIG. 4. FIG. 4 illustrates a case where the moving body 100 traveling in the X direction turns left at the intersection and then goes straight in the Y direction. A travel path 404 includes, for example, two straight roads and an intersection. Reference sign 407 represents a reference route generated by the route generation unit 303. On the reference route 407, a plurality of points (reference points) representing positions on the reference route 407 such as reference points 405 and 406 are schematically illustrated. The reference route 407 includes a straight line portion 401 and a straight line portion 403 for traveling on a straight road, and a curved line portion 402. The reference point 405 indicates a terminal end of the straight line portion 401 (a start end of the curved line portion 402), and the reference point 406 indicates a start end of the straight line portion 403 (a terminal end of the curved line portion 402).

In the travel control of the moving body 100, a travel behavior of the moving body 100 might differ depending on a length to be referred to out of the generated reference route. For example, a case is conceivable where a current position of the moving body 100 is a position of the reference point 408, and only three meters (for example, three reference points from the reference point 408 to the reference point 405) out of the reference route 407 is referred to. In this case, it is possible to implement the travel control of quickly responding to a change of the reference route 407 and travel on a locus close to the route of the reference route 407. On the other hand, in order to quickly respond to the change of the reference route 407, the moving body 100 easily swings left and right, and the travel behavior might become unstable. In contrast, in a case where 13 meters (for example, 13 reference points from the reference point 408 to the reference point 409) out of the reference route 407 is referred to, a position of the route after turning left, such as the reference point 409, is taken into consideration to recent travel control of the moving body. In this case, the travel behavior can be stabilized by taking into consideration the positions of more reference points, but in the example illustrated in FIG. 4, a degree of traveling on an inner side the reference route 407 is large (a degree of inward turning is large). That is, followability with respect to the reference route 407 decreases as compared with a case of referring to the reference route in a shorter range.

In the present embodiment, by performing the reference route length determination processing, the length of the reference route to be referred to is made different according to a situation. In particular, the length of the reference route to be referred to is set on the basis of a position of a change point of the travel region. For example, in a case where the moving body 100 travels in the straight line portion 401, the control amount determination unit 304 determines a length from the moving body 100 to the terminal end of the straight line portion 401 (reference point 405) as the length of the route to be actually referred to. In a case where the moving body 100 travels in the curved line portion 402, the control amount determination unit 304 determines a length from the moving body 100 to the terminal end of the curved line portion 402 as the length of the route to be actually referred to. Furthermore, in a case where the moving body 100 travels in the straight line portion 403, the control amount determination unit 304 determines a length from the moving body 100 to the terminal end of the straight line portion 403 (not illustrated) as the length of the route to be actually referred to. Note that, although the curved line portion 402 illustrated in FIG. 4 is described taking a case where there is one curved line that turns left into consideration, there might be a travel region where curved lines are continuous such that a curved line that turns right and a curved line that turns left are combined as an S-shaped curve. In such curved line, positive/negative of a curvature changes at a joint between the two curved lines. Therefore, a point at which positive/negative of the curvature changes of the curved line is referred to as a curvature change point (also considered as a terminal end of each curved line portion) for convenience.

Note that, in a case where the reference route is actually generated, there is a case where a straight road and a curved road are not clear, and there is a case where the straight road and the curved road are not divided as illustrated in FIG. 4. Therefore, in the reference route length determination processing of the present embodiment, the control amount determination unit 304 performs processing of identifying the terminal end of the straight line forming the reference route and processing of identifying the terminal end of the curved line forming the reference route and the change point of the predetermined curvature in parallel, and determines a position distant from the moving body 100 out of the identified positions as the length of the route to be actually referred to.

In this manner, it is possible to use a longer route that can be identified as a straight line or a curve while referring to a route in a specific type of route such as a straight line or a curved line. As a result, for example, a stable travel behavior can be obtained while reducing the degree of inward turning in the example illustrated in FIG. 4. That is, it is possible to achieve both responsiveness to the route to travel and stability of the behavior.

### <Series of Operations of Travel Control Processing in Moving Body 100>

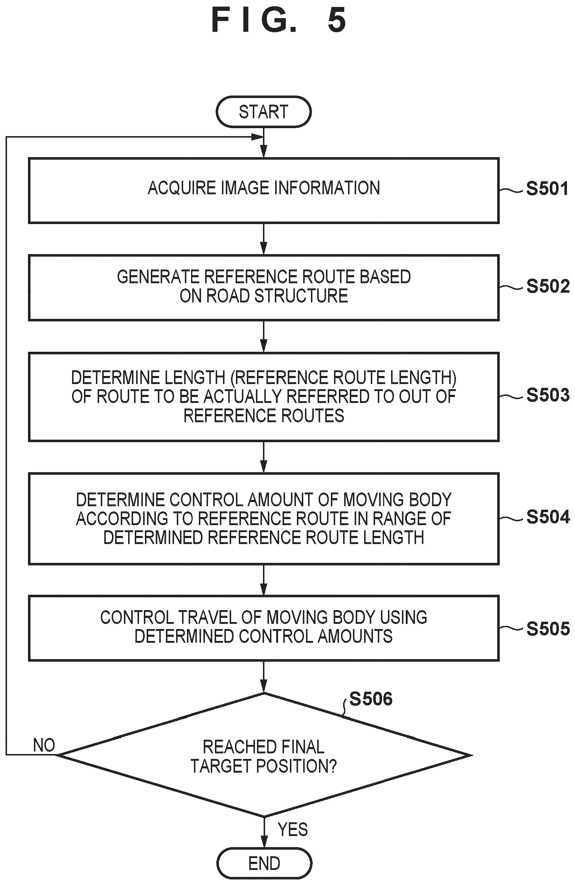

Next, a series of operations of travel control processing in the moving body 100 will be described with reference to FIG. 5. Note that, this processing is implemented when the control unit 130 develops and executes the program stored in the storage device 135 on the memory device of the control unit 130. Note that, a final target position is assumed to be designated in advance by the user.

At S501, the image information processing unit 302 of the control unit 130 acquires the outputs (image information) of the detection units 114 to 116. The image information processing unit 302 recognizes a travel region (for example, a road structure), a position, a shape and the like of an obstacle on the basis of the image information by using, for example, a deep neural network.

At S502, the route generation unit 303 of the control unit 130 generates a reference route on the basis of the recognized road structure. As an example, in a case where the moving body 100 turns right at a crossroads (intersection), the route generation unit 303 generates a reference route so as to pass through a position away from the center of the intersection by a first predetermined distance. The route generation unit 303 further generates the reference route so as to travel at a position away from a left end of the road after turning right by a second predetermined distance. Note that, the reference route generated by the route generation unit 303 is not limited to this example, and may be another route.

At S503, the control amount determination unit 304 of the control unit 130 executes the above-described reference route length determination processing and determines a length of the route to be actually referred to out of the reference route. A specific operation in the reference route length determination processing will be described later. At S504, the control amount determination unit 304 determines a control amount (velocity v and angular velocity ω) of the moving body 100 according to the reference route in a range of the determined reference route length.

At S505, the travel control unit 305 of the control unit 130 controls the motors 122a and 122b using the control amounts determined by the route generation unit 303 to control the travel of the moving body 100.

At S506, the control unit 130 determines whether the final target position is reached. In a case where it is determined that the final target position is not reached, the control unit 130 returns the processing to S501 and repeats the processing. In a case where it is determined that the final target position is reached, the control unit 130 terminates the series of processing. Note that, in this processing, a case where the reference route is generated on the basis of the recognized road structure has been described as an example; however, the reference route can be generated on the basis of not only the road structure but also the travel region recognized on the basis of the image.

### <Series of Operations of Reference Route Length Determination Processing in Moving Body 100>

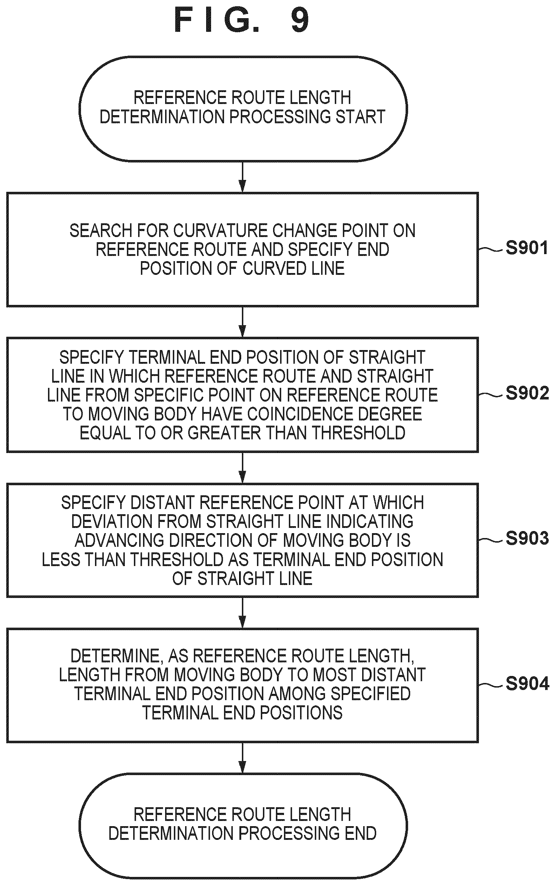

Next, a series of operations of the reference route length determination processing executed by the control amount determination unit 304 will be described with reference to FIG. 9. Note that, this processing is implemented when the control unit 130 develops and executes the program stored in the storage device 135 on the memory device of the control unit 130. Note that this processing is executed when above-described S503 is started.

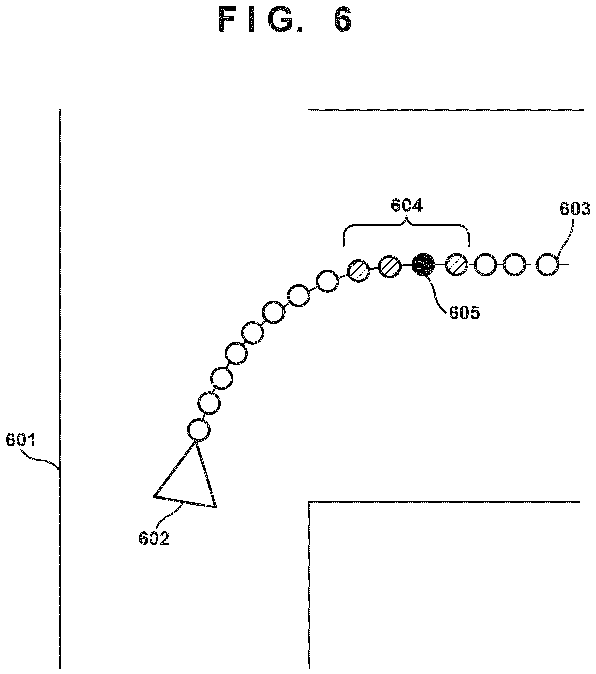

At S901, the control amount determination unit 304 searches for the curvature change point on the reference route and specifies a terminal end position of the curved line. Processing of specifying the terminal end position of the curved line will be described with reference to FIG. 6.

The example illustrated in FIG. 6 illustrates an example of processing in which the moving body 100 refers to the reference route and determines the reference route length on a road 601 including a road structure that can turn right. Specifically, a reference route 603 is provided, and there is a plurality of reference points on the reference route 603 from a position of a moving body 602. In the present embodiment, the control amount determination unit 304 selects consecutive reference points (for example, four reference points in a range 604 including a standard reference point 605) included in a predetermined range, approximates a circular arc passing through these reference points, and determines a change in curvature of the approximated circular arc. For example, the control amount determination unit 304 sequentially moves the standard reference point away from the position the closest to the moving body 602 to obtain the change in curvature at each reference point. For example, the control amount determination unit 304 obtains an average value and a deviation of curvatures at the selected reference points. In a case where the deviation exceeds a threshold, a position of the standard reference point 605 can be set as the curvature change point. Since the curved line portion in the intersection has a substantially constant curvature, a portion in which the deviation increases, that is, a portion in which the curvature is equal to or smaller than a predetermined value can be the curvature change point. In the example of FIG. 6, for example, the control amount determination unit 304 can specify the position of the standard reference point 605 as the terminal end position of the curved line.

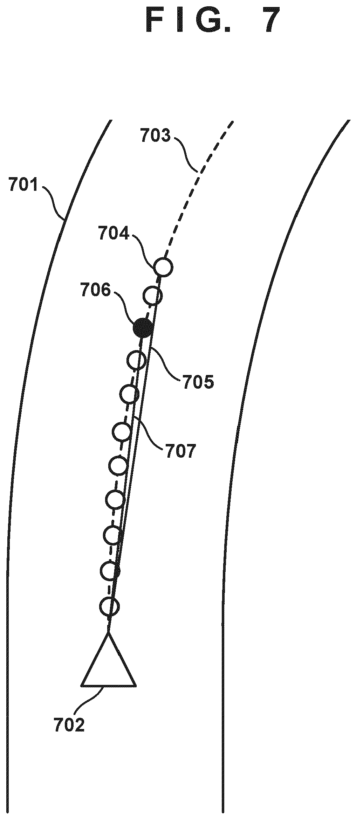

At S902, the control amount determination unit 304 specifies a terminal end position of a straight line in which the reference route and a straight line from a specific point on the reference route to the moving body have a coincidence degree equal to or greater than a threshold. Processing of specifying the terminal end position of the straight line at this step will be described with reference to FIG. 7.

The example illustrated in FIG. 7 illustrates an example of processing in which a moving body 702 that travels on a road 701 refers to a reference route 703 and determines a reference route length. The control amount determination unit 304 performs fitting between a straight line connecting the moving body 702 and the reference point and the reference route sequentially from a reference point distant by a predetermined distance or from an identifiable most distant reference point. For example, the control amount determination unit 304 determines whether the coincidence degree between a straight line connecting the moving body 702 and the reference point 704 and the reference route between the moving body 702 and the reference point 704 is equal to or greater than a threshold. In the determination of the coincidence degree, it may be determined whether deviation from the straight line connecting the moving body 702 and the reference point 704 to the reference route satisfies a certain condition (whether the sum of squares of the deviation is equal to or less than a predetermined threshold). In a case where the straight line connecting the moving body 702 and the reference point 704 and the reference route do not indicate the coincidence degree equal to or greater than the threshold, the control amount determination unit 304 further performs processing on the reference point closer to the moving body 702. For example, the control amount determination unit 304 can determine the coincidence degree between the straight line connecting the moving body 702 and the reference point 706 and the reference route. In a case where the straight line and the reference route have the coincidence degree equal to or greater than the threshold, the control amount determination unit 304 specifies the reference point 706 as the terminal end position of the straight line. That is, the control amount determination unit 304 specifies, as the terminal end position of the straight line, the reference point the most distant from the moving body 702 at which the deviation from the straight line to the reference route satisfies a certain condition.

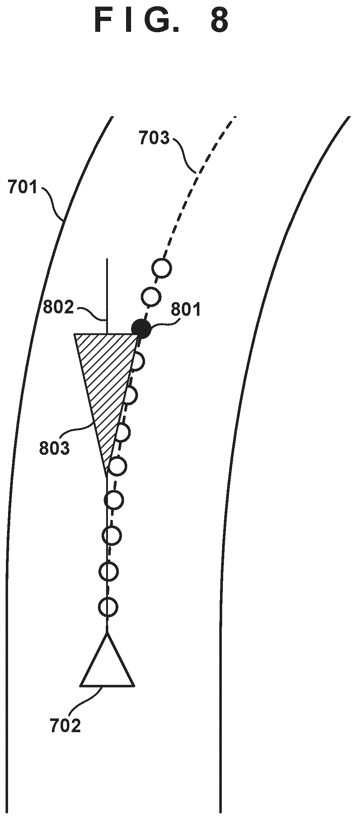

At S903, the control amount determination unit 304 specifies the most distant reference point at which deviation from a straight line indicating a current advancing direction of the moving body 100 is less than a threshold as the terminal end position of the straight line on the reference route. Processing of specifying the terminal end position of the straight line at this step will be described with reference to FIG. 8.

The example illustrated in FIG. 8 illustrates an example of processing in which the moving body 702 that travels on the road 701 refers to the reference route 703 and determines the reference route length. In this example, the control amount determination unit 304 specifies the most distant reference point at which the deviation of the position from the straight line 802 indicating the current advancing direction of the moving body 702 is less than a threshold as the terminal end position of the straight line. For example, the control amount determination unit 304 determines whether the dissociation degree between each reference point and the straight line 802 is less than the threshold. A triangle 803 represents a threshold range for determining the dissociation degree between each reference point and the straight line 802 on the basis of a distance from the standard reference point on the straight line 802 and a predetermined angle. The control amount determination unit 304 determines whether it is less than the threshold for each reference point while moving the standard reference point farther on the straight line 802 from a current position of the moving body 702. At that time, some consecutive reference points may be sequentially evaluated. In a case where each reference point is within the threshold range illustrated by the triangle 803, it is determined that it is less than the threshold for the reference point. For example, it is determined that the deviation of the position of the reference point 801 from the straight line 802 satisfies a certain condition (less than the threshold). Furthermore, it is assumed that a position of a next reference point of the reference point 801 deviates from the straight line 802 by the threshold or more. In this case, the control amount determination unit 304 specifies the position of the reference point 801 as the terminal end position of the straight line on the reference route

At S904, the control amount determination unit 304 determines, as the reference route length, a length from the moving body 100 to the most distant terminal end position among the terminal end positions specified at S901 to S903. Thereafter, the control amount determination unit 304 terminates the series of processing and returns to a caller.

Note that, in the above description, the example of determining the length of the reference route to be referred to for controlling the travel of the moving body 100 in the reference route length determination processing has been described. Note that, the present embodiment is not limited to the determination of the length of the reference route as long as a part of the reference route to be referred to for controlling the travel of the moving body 100 is determined. In the above-described embodiment, the case where the reference route is generated for the moving body to travel and is referred to has been described as an example. Note that, the reference route may be a route generated for other purposes as long as the reference route is referred to for controlling the travel of the moving body.

As described above, in the above-described embodiment, the reference route for the moving body 100 to travel is generated, and a part of the reference route to be referred to for controlling the travel of the moving body out of the reference route is determined. **In** particular, the control amount determination unit 304 identifies the terminal end of the straight line forming the reference route by first identification processing, and identifies the terminal end of the curved line forming the reference route or the change point of a predetermined curvature by second identification processing. Then, a part of the reference route is determined so as to include a position distant from the position of the moving body 100 out of the identified terminal ends. In this manner, it is possible to limit the reference route to a length of the route of a specific type such as a straight line or a curved line, and use a longer route that can be identified as the straight line or curved line. That is, it is possible to achieve both responsiveness to the route to travel and stability of the behavior.

Note that, the configuration of the above-described control unit 130 may function in various forms as the moving body control system. For example, the moving body control system may be configured in a form in which at least a part of the above-described control unit 130 is configured on a device outside the moving body 100, for example, an external server. Alternatively, the moving body control system may be the moving body 100, or may be incorporated in the moving body 100 (that is, may be the control unit 130). A computer program for operating the above-described moving body 100 may be a computer program for causing one or more computers to function as each means of the moving body control system.

### <Specific feature combinations and advantages>

A specific feature combination regards a moving body control system that controls an operation of a moving body (for example, 100) comprises: route generation means (for example, 303) for generating a reference route indicating a route from a position of the moving body on which the moving body travels; part determination means (for example, 304) for determining a part of the reference route to be referred to for controlling travel of the moving body out of the reference route; and control amount determination means (for example, 304) for determining a control amount for controlling travel of the moving body with reference to the determined part of the reference route. The part determination means determines a part of the reference route so as to include a position distant from the position of the moving body out of a terminal end of a straight line forming the reference route identified by first identification processing, and a terminal end or a change point of a predetermined curvature of a curved line forming the reference route identified by second identification processing.

According to this feature combination, it is possible to achieve both responsiveness to the route to travel and stability of behavior.

In the above described feature combination, the first identification processing identifies the terminal end of the straight line forming the reference route on the basis of a coincidence degree between the reference route and a straight line from a specific point on the reference route to the moving body.

According to this feature combination, it becomes possible to separate a portion that can be approximated to a straight line starting from a moving body position out of the reference route as a straight line portion forming the reference route.

In the above described feature combination, the first identification processing identifies the terminal end of the straight line forming the reference route on the basis of deviation from a straight line indicating a current advancing direction of the moving body.

According to this feature combination, it becomes possible to separate a portion of the reference route extending in the advancing direction of the moving body out of the reference route as the straight line portion forming the reference route.

In the above described feature combination, the first identification processing performs both a first process based on a coincidence degree between the reference route and a straight line from a specific point on the reference route to the moving body, and a second process based on deviation from a straight line indicating a current advancing direction of the moving body, and identifies a terminal end distant from the moving body as a terminal end of the straight line.

According to this feature combination, it becomes possible to make a section that can be identified farther as a straight line from the position of the moving body a straight portion forming the reference route, and stabilize a behavior of the moving body by identifying a longer straight line portion.

In the above described feature combination, the second identification processing identifies a terminal end of a curved line forming the reference route on the basis of a change in curvature of a circular arc passing through a plurality of positions on the reference route.

According to this feature combination, it becomes possible to easily identify a terminal position of a curve portion of a road included in a range in which a curvature is constant out of the reference route and separate the curved line of the reference route as a curved line portion forming the reference route.

In the above described feature combination, recognition means (for example, 302) for recognizing a travel region for generating the reference route on the basis of an image obtained by capturing an external field of the moving body.

According to this feature combination, it becomes possible to identify a travel region of a road present in front of the moving body without additional information indicating a travel path such as a map, and autonomously travel the road.

### REFERENCE SIGNS LIST

- 100: Moving body
- 120: Drive wheel
- 130: Control unit
- 303: Route generation unit
- 304: Control amount determination unit
- 305: Travel control unit

## Claims

1. A moving body control system that controls an operation of a moving body (100), the moving body control system comprising:
route generation means (303) for generating a reference route indicating a route on which the moving body (100) travels from a current position of the moving body (100);
part determination means (304) for determining a part of the reference route to be referred to for controlling travel of the moving body (100) out of the reference route; and
control amount determination means (304) for determining, as a control amount, at least a velocity and an angular velocity of the moving body (100) for controlling travel of the moving body (100) with reference to the determined part of the reference route,
**characterized in that**
the part determination means (304), in first identification processing, performs fitting between a straight line from a specific point on the reference route to the moving body (100) and the reference route, and identifies, as a straight line forming the reference route and a terminal end of the straight line, a straight line having a coincidence degree with the reference route equal to or greater than a threshold;
the part determination means (304), in second identification processing, approximates a circular arc passing through a plurality of positions on the reference route while sequentially moving a standard reference point farther away, and identifies, on the basis of a change in curvature of the approximated circular arc, a curved line forming the reference route and a terminal end of the curved line; and
the part determination means (304) determines a part of the reference route so as to include whichever is farther from the position of the moving body (100): the terminal end of the straight line forming the reference route identified by the first identification processing; or the terminal end of the curved line forming the reference route identified by the second identification processing.

2. The moving body control system according to claim 1, wherein
the first identification processing identifies the terminal end of the straight line forming the reference route on the basis of deviation from a straight line indicating a current advancing direction of the moving body (100).

3. The moving body control system according to claim 1, wherein
the first identification processing performs both a first process based on a coincidence degree between the reference route and a straight line from a specific point on the reference route to the moving body (100), and a second process based on deviation from a straight line indicating a current advancing direction of the moving body (100), and identifies a terminal end distant from the moving body (100) as a terminal end of the straight line.

4. The moving body control system according to claim 1, further comprising:
recognition means (302) for recognizing a travel region for generating the reference route on the basis of an image obtained by capturing an external field of the moving body (100).

5. A moving body comprising:
route generation means (303) for generating a reference route indicating a route on which the moving body (100) travels from a current position of the moving body (100);
part determination means (304) for determining a part of the reference route to be referred to for controlling travel of the moving body (100) out of the reference route; and
control amount determination means (304) for determining, as a control amount, for at least a velocity and an angular velocity of the moving body (100) controlling travel of the moving body (100) with reference to the determined part of the reference route,
**characterized in that**
the part determination means (304), in first identification processing, performs fitting between a straight line from a specific point on the reference route to the moving body (100) and the reference route, and identifies, as a straight line forming the reference route and a terminal end of the straight line, a straight line having a coincidence degree with the reference route equal to or greater than a threshold;
the part determination means (304), in second identification processing, approximates a circular arc passing through a plurality of positions on the reference route while sequentially moving a standard reference point farther away, and identifies, on the basis of a change in curvature of the approximated circular arc, a curved line forming the reference route and a terminal end of the curved line; and
the part determination means (304) determines a part of the reference route so as to include whichever is farther from the position of the moving body (100): the terminal end of the straight line forming the reference route identified by the first identification processing; or the terminal end of the curved line forming the reference route identified by the second identification processing.

6. A control method of a moving body (100) control system that controls an operation of a moving body (100), the control method comprising:
a route generation step (S502) of generating a reference route indicating a route on which the moving body (100) travels from a current position of the moving body (100);
a part determination step (S503) of determining a part of the reference route to be referred to for controlling travel of the moving body (100) out of the reference route; and
a control amount determination step (S504) of determining, as a control amount, at least a velocity and an angular velocity of the moving body (100) for controlling travel of the moving body (100) with reference to the determined part of the reference route,
**characterized in that**
the part determination step (S504, S902, S903) includes, in first identification processing, performing fitting between a straight line from a specific point on the reference route to the moving body (100) and the reference route, and identifying, as a straight line forming the reference route and a terminal end of the straight line, a straight line having a coincidence degree with the reference route equal to or greater than a threshold;
the part determination step (S504, S901) includes, in the second identification processing, approximating a circular arc passing through a plurality of positions on the reference route while sequentially moving a standard reference point farther away, and identifying, on the basis of a change in curvature of the approximated circular arc, a curved line forming the reference route and a terminal end of the curved line; and
the part determination step (S504, S904) includes determining a part of the reference route so as to include whichever is farther from the position of the moving body (100): the terminal end of the straight line forming the reference route identified by the first identification processing; or the terminal end of the curved line forming the reference route identified by the second identification processing.

7. A program for causing a computer to function as each means of the moving body control system according to any one of claims 1 to 4.

8. A storage medium storing a program for causing a computer to function as each means of the moving body control system according to any one of claims 1 to 4.

## Patentansprüche

1. Ein Steuerungssystem für einen sich bewegenden Körper, das den Betrieb eines sich bewegenden Körpers (100) steuert, wobei das Steuerungssystem für einen sich bewegenden Körper aufweist:
eine Routenerzeugungseinrichtung (303) zum Erzeugen einer Referenzroute, die eine Route angibt, auf der sich der sich bewegende Körper (100) von einer aktuellen Position des sich bewegenden Körpers (100) aus bewegt;
eine Abschnittbestimmungseinrichtung (304) zum Bestimmen eines Abschnitts der Referenzroute, auf den Bezug genommen werden soll, um die Bewegung des sich bewegenden Körpers (100) außerhalb der Referenzroute zu steuern; und
eine Steuergrößen-Bestimmungseinrichtung (304) zum Bestimmen zumindest einer Geschwindigkeit und einer Winkelgeschwindigkeit des sich bewegenden Körpers (100) als Steuergröße, um die Bewegung des sich bewegenden Körpers (100) unter Bezugnahme auf den bestimmten Abschnitt der Referenzroute zu steuern,
**dadurch gekennzeichnet, dass**
die Abschnittbestimmungseinrichtung (304), im Rahmen eines ersten Identifizierungsvorgangs, eine Anpassung zwischen einer von einem bestimmten Punkt auf der Referenzroute zum sich bewegenden Körper (100) verlaufenden geraden Linie und der Referenzroute durchführt, und als eine die Referenzroute bildende gerade Linie sowie als Endpunkt dieser geraden Linie eine gerade Linie identifiziert, deren Übereinstimmungsgrad mit der Referenzroute gleich oder größer als ein Schwellenwert ist;
die Abschnittbestimmungseinrichtung (304) im Rahmen eines zweiten Identifizierungsvorgangs eine Approximierung an einen Kreisbogen durchführt, der durch mehrere Positionen auf der Referenzroute verläuft, während sie einen Standardreferenzpunkt schrittweise weiter entfernt, und auf der Grundlage einer Änderung der Krümmung des approximierten Kreisbogens eine die Referenzroute bildende gekrümmte Linie identifiziert, sowie einen Endpunkt dieser gekrümmten Linie; und
die Abschnittbestimmungseinrichtung (304) einen Abschnitt der Referenzroute so bestimmt, dass er dasjenige Ende einschließt, das von der Position des sich bewegenden Körpers (100) weiter entfernt ist: entweder den Endpunkt der geraden Linie, die die durch den ersten Identifizierungsvorgang identifizierte Referenzroute bildet, oder den Endpunkt der gekrümmten Linie, die die durch den zweiten Identifizierungsvorgang identifizierte Referenzroute bildet.

2. Das Steuerungssystem für einen sich bewegenden Körper nach Anspruch 1, wobei
der erste Identifizierungsvorgang den Endpunkt der die Referenzroute bildenden geraden Linie auf der Grundlage der Abweichung von einer die aktuelle Bewegungsrichtung des sich bewegenden Körpers (100) angebenden geraden Linie identifiziert.

3. Das Steuerungssystem für einen sich bewegenden Körper nach Anspruch 1, wobei
der erste Identifizierungsvorgang sowohl einen ersten Vorgang auf der Grundlage eines Übereinstimmungsgrades zwischen der Referenzroute und einer geraden Linie von einem bestimmten Punkt auf der Referenzroute zum sich bewegenden Körper (100) als auch einen zweiten Vorgang auf der Grundlage der Abweichung von einer eine aktuelle Bewegungsrichtung des sich bewegenden Körpers (100) angebenden geraden Linie durchführt und ein vom sich bewegenden Körper (100) entferntes Ende als das Ende der geraden Linie identifiziert.

4. Das Steuerungssystem für einen sich bewegenden Körper nach Anspruch 1, ferner aufweisend:
eine Erkennungseinrichtung (302) zum Erkennen eines Bewegungsbereichs zum Erzeugen der Referenzroute auf der Grundlage eines durch Erfassen einer äußeren Umgebung des sich bewegenden Körpers (100) gewonnenen Bildes.

5. Ein sich bewegender Körper, aufweisend:
eine Routenerzeugungseinrichtung (303) zum Erzeugen einer Referenzroute, die eine Route angibt, auf der sich der sich bewegende Körper (100) von einer aktuellen Position des sich bewegenden Körpers (100) aus bewegt;
eine Abschnittbestimmungseinrichtung (304) zum Bestimmen eines Abschnitts der Referenzroute, auf den Bezug genommen werden soll, um die Fortbewegung des sich bewegenden Körpers (100) außerhalb der Referenzroute zu steuern; und
eine Steuergrößen-Bestimmungseinrichtung (304) zum Bestimmen zumindest einer Geschwindigkeit und einer Winkelgeschwindigkeit des sich bewegenden Körpers als Steuergröße (100), um die Bewegung des sich bewegenden Körpers (100) unter Bezugnahme auf den bestimmten Abschnitt der Referenzroute zu steuern,
**dadurch gekennzeichnet, dass**
die Abschnittbestimmungseinrichtung (304), im Rahmen eines ersten Identifizierungsvorgangs, eine Anpassung zwischen einer von einem bestimmten Punkt auf der Referenzroute zum sich bewegenden Körper (100) verlaufenden geraden Linie und der Referenzroute durchführt, und als eine die Referenzroute bildende gerade Linie sowie als Endpunkt dieser geraden Linie eine gerade Linie identifiziert, deren Übereinstimmungsgrad mit der Referenzroute gleich oder größer als ein Schwellenwert ist;
die Abschnittbestimmungseinrichtung (304) im Rahmen eines zweiten Identifizierungsvorgangs eine Approximierung an einen Kreisbogen durchführt, der durch mehrere Positionen auf der Referenzroute verläuft, während sie einen Standardreferenzpunkt schrittweise weiter entfernt, und auf der Grundlage einer Änderung der Krümmung des approximierten Kreisbogens eine die Referenzroute bildende gekrümmte Linie identifiziert, sowie einen Endpunkt dieser gekrümmten Linie; und
die Abschnittbestimmungseinrichtung (304) einen Abschnitt der Referenzroute so bestimmt, dass er dasjenige Ende einschließt, das von der Position des sich bewegenden Körpers (100) weiter entfernt ist: entweder den Endpunkt der geraden Linie, die die durch den ersten Identifizierungsvorgang identifizierte Referenzroute bildet, oder den Endpunkt der gekrümmten Linie, die die durch den zweiten Identifizierungsvorgang identifizierte Referenzroute bildet.

6. Ein Steuerungsverfahren für ein Steuerungssystem eines sich bewegenden Körpers (100), das den Betrieb eines sich bewegenden Körpers (100) steuert, wobei das Steuerungsverfahren aufweist:
einen Routenerzeugungsschritt (S502) zum Erzeugen einer Referenzroute, die eine Route angibt, auf der sich der sich bewegende Körper (100) von einer aktuellen Position des sich bewegenden Körpers (100) aus bewegt;
einen Abschnittbestimmungsschritt (S503) zum Bestimmen eines Abschnitts der Referenzroute, auf den Bezug genommen werden soll, um die Fortbewegung des sich bewegenden Körpers (100) außerhalb der Referenzroute zu steuern; und
einen Steuergrößen-Bestimmungsschritt (S504) zum Bestimmen zumindest einer Geschwindigkeit und einer Winkelgeschwindigkeit des sich bewegenden Körpers (100) als Steuergröße, um die Bewegung des sich bewegenden Körpers (100) unter Bezugnahme auf den bestimmten Abschnitt der Referenzroute zu steuern,
**dadurch gekennzeichnet, dass**
der Abschnittbestimmungsschritt (S504, S902, S903), im Rahmen eines ersten Identifizierungsvorgangs, eine Anpassung zwischen einer von einem bestimmten Punkt auf der Referenzroute zum sich bewegenden Körper (100) verlaufenden geraden Linie und der Referenzroute durchführt, und als eine die Referenzroute bildende gerade Linie sowie als Endpunkt dieser geraden Linie eine gerade Linie identifiziert, deren Übereinstimmungsgrad mit der Referenzroute gleich oder größer als ein Schwellenwert ist;
der Abschnittbestimmungsschritt (S504, S901), im Rahmen des zweiten Identifizierungsvorgangs, eine Approximierung an einen Kreisbogen durchführt, der durch mehrere Positionen auf der Referenzroute verläuft, während sie einen Standardreferenzpunkt schrittweise weiter entfernt, und auf der Grundlage einer Änderung der Krümmung des approximierten Kreisbogens eine die Referenzroute bildende gekrümmte Linie identifiziert, sowie einen Endpunkt dieser gekrümmten Linie; und
der Abschnittbestimmungsschritt (S504, S904) die Bestimmung eines Abschnitts der Referenzroute aufweist, sodass er dasjenige Ende einschließt, das von der Position des sich bewegenden Körpers (100) weiter entfernt ist: entweder den Endpunkt der geraden Linie, die die durch den ersten Identifizierungsvorgang identifizierte Referenzroute bildet, oder den Endpunkt der gekrümmten Linie, die die durch den zweiten Identifizierungsvorgang identifizierte Referenzroute bildet.

7. Ein Programm, das einen Computer dazu veranlasst, als jede der Einrichtungen des Steuerungssystems für sich bewegende Körper gemäß einem der Ansprüche 1 bis 4 zu fungieren.

8. Ein Speichermedium, auf dem ein Programm gespeichert ist, das einen Computer dazu veranlasst, als jede der Einrichtungen des Steuerungssystems für sich bewegende Körper gemäß einem der Ansprüche 1 bis 4 zu fungieren.

## Revendications

1. Système de commande de corps mobile qui commande une opération d'un corps mobile (100), le système de commande de corps mobile comportant :
des moyens de génération d'itinéraire (303) pour la génération d'un itinéraire de référence indiquant un itinéraire sur lequel le corps mobile (100) se déplace à partir d'une position actuelle du corps mobile (100) ;
des moyens de détermination de partie (304) pour la détermination d'une partie de l'itinéraire de référence à laquelle se référencer pour la commande du déplacement du corps mobile (100) parmi l'itinéraire de référence ; et
des moyens de détermination de quantité de commande (304) pour la détermination, comme étant une quantité de commande, d'au moins une vitesse et une vitesse angulaire du corps mobile (100) pour la commande du déplacement du corps mobile (100) en référence à la partie déterminée de l'itinéraire de référence,
**caractérisé en ce que**
les moyens de détermination de partie (304), dans un premier traitement d'identification, réalisent un ajustement entre une ligne droite, d'un point spécifique sur l'itinéraire de référence au corps mobile (100), et l'itinéraire de référence, et identifient, comme étant une ligne droite formant l'itinéraire de référence et une extrémité terminale de la ligne droite, une ligne droite présentant un degré de coïncidence avec l'itinéraire de référence égal ou supérieur à un seuil ;
les moyens de détermination de partie (304), dans un deuxième traitement d'identification, font une approximation d'un arc circulaire passant par une pluralité de positions sur l'itinéraire de référence tout en déplaçant en séquence un point de référence standard plus loin, et identifient, sur la base d'un changement de courbure de l'arc circulaire faisant l'objet de l'approximation, une ligne courbée formant l'itinéraire de référence et une extrémité terminale de la ligne courbée ; et
les moyens de détermination de partie (304) déterminent une partie de l'itinéraire de référence de façon à inclure ce qui est le plus éloigné de la position du corps mobile (100) : l'extrémité terminale de la ligne droite formant l'itinéraire de référence identifiée par le premier traitement d'identification ; ou l'extrémité terminale de la ligne courbée formant l'itinéraire de référence identifiée par le deuxième traitement d'identification.

2. Système de commande de corps mobile selon la revendication 1, dans lequel
le premier traitement d'identification identifie l'extrémité terminale de la ligne droite formant l'itinéraire de référence sur la base d'un écart par rapport à une ligne droite indiquant une direction d'avancement actuelle du corps mobile (100).

3. Système de commande de corps mobile selon la revendication 1, dans lequel
le premier traitement d'identification réalise à la fois un premier processus basé sur un degré de coïncidence entre l'itinéraire de référence et une ligne droite, d'un point spécifique sur l'itinéraire de référence au corps mobile (100), et un deuxième processus basé sur un écart par rapport à une ligne droite indiquant une direction d'avancement actuelle du corps mobile (100), et identifie une extrémité terminale distante du corps mobile (100) comme étant une extrémité terminale de la ligne droite.

4. Système de commande de corps mobile selon la revendication 1, comportant en outre :
des moyens de reconnaissance (302) pour la reconnaissance d'une région de déplacement pour la génération de l'itinéraire de référence sur la base d'une image obtenue par la capture d'un champ externe du corps mobile (100).

5. Corps mobile comportant :
des moyens de génération d'itinéraire (303) pour la génération d'un itinéraire de référence indiquant un itinéraire sur lequel le corps mobile (100) se déplace à partir d'une position actuelle du corps mobile (100) ;
des moyens de détermination de partie (304) pour la détermination d'une partie de l'itinéraire de référence à laquelle se référencer pour la commande du déplacement du corps mobile (100) parmi l'itinéraire de référence ; et
des moyens de détermination de quantité de commande (304) pour la détermination, comme étant une quantité de commande, d'au moins une vitesse et une vitesse angulaire du corps mobile (100) pour la commande du déplacement du corps mobile (100) en référence à la partie déterminée de l'itinéraire de référence,
**caractérisé en ce que**
les moyens de détermination de partie (304), dans un premier traitement d'identification, réalisent un ajustement entre une ligne droite, d'un point spécifique sur l'itinéraire de référence au corps mobile (100), et l'itinéraire de référence, et identifient, comme étant une ligne droite formant l'itinéraire de référence et une extrémité terminale de la ligne droite, une ligne droite présentant un degré de coïncidence avec l'itinéraire de référence égal ou supérieur à un seuil ;
les moyens de détermination de partie (304), dans un deuxième traitement d'identification, font une approximation d'un arc circulaire passant par une pluralité de positions sur l'itinéraire de référence tout en déplaçant en séquence un point de référence standard plus loin, et identifient, sur la base d'un changement de courbure de l'arc circulaire faisant l'objet de l'approximation, une ligne courbée formant l'itinéraire de référence et une extrémité terminale de la ligne courbée ; et
les moyens de détermination de partie (304) déterminent une partie de l'itinéraire de référence de façon à inclure ce qui est le plus éloigné de la position du corps mobile (100) : l'extrémité terminale de la ligne droite formant l'itinéraire de référence identifiée par le premier traitement d'identification ; ou l'extrémité terminale de la ligne courbée formant l'itinéraire de référence identifiée par le deuxième traitement d'identification.

6. Procédé de commande d'un système de commande de corps mobile (100) qui commande une opération d'un corps mobile (100), le procédé de commande comportant :
une étape de génération d'itinéraire (S502) consistant à générer un itinéraire de référence indiquant un itinéraire sur lequel le corps mobile (100) se déplace à partir d'une position actuelle du corps mobile (100) ;
une étape de détermination de partie (S503) consistant à déterminer une partie de l'itinéraire de référence à laquelle se référencer pour la commande du déplacement du corps mobile (100) parmi l'itinéraire de référence ; et
une étape de détermination de quantité de commande (S504) consistant à déterminer, comme étant une quantité de commande, au moins une vitesse et une vitesse angulaire du corps mobile (100) pour la commande du déplacement du corps mobile (100) en référence à la partie déterminée de l'itinéraire de référence,
**caractérisé en ce que**
l'étape de détermination de partie (S504, S902, S903) inclut, dans un premier traitement d'identification, la réalisation d'un ajustement entre une ligne droite, d'un point spécifique sur l'itinéraire de référence au corps mobile (100), et l'itinéraire de référence, et l'identification, comme étant une ligne droite formant l'itinéraire de référence et une extrémité terminale de la ligne droite, d'une ligne droite présentant un degré de coïncidence avec l'itinéraire de référence égal ou supérieur à un seuil ;
l'étape de détermination de partie (S504, S901) inclut, dans un deuxième traitement d'identification, l'approximation d'un arc circulaire passant par une pluralité de positions sur l'itinéraire de référence tout en éloignant en séquence un point de référence standard, et l'identification, sur la base d'un changement de courbure de l'arc circulaire faisant l'objet de l'approximation, d'une ligne courbée formant l'itinéraire de référence et une extrémité terminale de la ligne courbée ; et
l'étape de détermination de partie (S504, S904) inclut la détermination d'une partie de l'itinéraire de référence de façon à inclure ce qui est le plus éloigné de la position du corps mobile (100) : l'extrémité terminale de la ligne droite formant l'itinéraire de référence identifiée par le premier traitement d'identification ; ou l'extrémité terminale de la ligne courbée formant l'itinéraire de référence identifiée par le deuxième traitement d'identification.

7. Programme pour amener un ordinateur à fonctionner comme chacun des moyens du système de commande de corps mobile selon l'une quelconque des revendications 1 à 4.

8. Support de stockage stockant un programme pour amener un ordinateur à fonctionner comme chacun des moyens du système de commande de corps mobile selon l'une quelconque des revendications 1 à 4.
